# EUROPEAN PATENT SPECIFICATION

(11) **EP 3 948 224 B1**
(45) Date of publication and mention of the grant of the patent: **28.10.2026**
(21) Application number: 21731631.4
(22) Date of filing: 14.05.2021
(51) Int. Cl.: G01N 15/14

(54) **METHOD OF UNCLOGGING A FLOW CYTOMETER AND FLOW CYTOMETER SYSTEM**
VERFAHREN ZUR FREIMACHUNG EINES DURCHFLUSSZYTOMETERS UND DURCHFLUSSZYTOMETERSYSTEM
PROCÉDÉ DE DÉSOBSTRUCTION D'UN CYTOMÈTRE EN FLUX ET SYSTÈME DE CYTOMÈTRE EN FLUX

(30) Priority: 19.05.2020 US 202063027016 P; 06.05.2021 US 202163184998 P
(43) Date of publication of application: 09.02.2022
(73) Proprietor: Life Technologies Corporation, Carlsbad, CA 92008 (US)
(72) Inventor: FOX, Daniel N., Carlsbad, CA 92008 (US); FOX, Nathan M., Carlsbad, CA 92008 (US); HARRIS, Rodney C., Carlsbad, CA 92008 (US)
(74) Representative: Stellbrink & Partner Patentanwälte mbB
(86) International application number: PCT/US2021/032614
(87) International publication number: WO 2021/236466

(56) References cited:
- EP-A1- 1 062 494
- EP-A2- 1 403 633
- US-A- 4 790 653

## Description

### TECHNICAL FIELD

The present disclosure relates to the field of flow cytometers and to the field of fluidic washing systems.

### BACKGROUND

Flow cytometers are important tools for both sorting and analyzing cells, and are useful in providing important information regarding cells and also in providing sorted cells for various purposes. Flow cytometers operate using various working fluids, including sheath fluids and other carrier fluids. These working fluids can, under certain conditions, evaporate leave behind material (e.g., salts) that in turn inhibit the flow cytometer's performance and require removal.

To date, a number of attempts have been made to prevent clogs from forming on or in the nozzle. For example, disposable nozzles have been made so that nozzle can be replaced each time the system is used. This approach, however, results in significant cost to the user and also requires the operator to replace the tip each time the flow cytometer is used. Other approaches - such as requiring the operator to manually remove the nozzle tip after each use for cleaning - similarly time-consuming, cutting into operator time and creating downtime for the flow cytometer system. Accordingly, there is a long-felt need in the field for systems and methods for unclogging flow cytometers and other fluidic systems.
US 4 790 653 A discloses a housing for a particle flow-through apparatus comprising a body member having a passageway therethrough including a region through which substantially one particle at a time may pass in a normal direction of flow. An operative plunger is positioned in the passageway so that the plunger is depressible into the passageway. Depression of the plunger creates increased pressure in the passageway for dislodging clogged particles or debris from the region in a direction reverse to the normal direction of particle flow.

### SUMMARY

In an example useful to understand the claimed invention, the present disclosure may therefore provide a method of unclogging and sealing a nozzle in a flow cytometer comprising: moving a nozzle system of the flow cytometer from an operating position that is aligned with a docking station; lowering the nozzle system to a docking position on a docking station so that a nozzle tip of the nozzle system is inserted into a tip sealing cup of the docking station to form a seal between the tip sealing cup and the nozzle tip; pumping rinse fluid from the docking station through the nozzle tip and to a waste port to unclog obstructions present in the nozzle system and flush sheath fluid from the nozzle system; holding the nozzle system in the docking position until operation of the flow cytometer is initiated.

In another example useful to understand the claimed invention, the present disclosure may further provide a system for unclogging and sealing a nozzle in a flow cytometer comprising: a nozzle system comprising a nozzle that creates a stream of sheath fluid that flows through a nozzle tip; a sheath supply port that provides a supply of pressurized sheath fluid to the nozzle; a sheath supply valve that opens and closes the sheath supply port to the nozzle; a waste disposed port that provides access to a disposal of waste fluids; a waste valve that opens and closes the waste disposal port; a docking station comprising: a rinse fluid supply that has a predetermined pressure; a tip sealing cup coupled to the rinse fluid supply; a nozzle mover coupled to the nozzle system that moves the nozzle system from an operating position to a docking position where the nozzle tip is inserted into the tip sealing cup so that the rinse fluid supply can be flushed through the nozzle to the waste disposal port when the waste valve is closed.

In a first aspect the present disclosure relates to a method according to claims 1-9.

In a second aspect, the present disclosure relates to a flow cytometer system according to claims 10-18.

In a third aspect useful to understand the claimed invention, the present disclosure can relate to a method, comprising: operating a system according to claims 10-18.

In a fourth aspect useful to understand the claimed invention, the present disclosure can relate to a method, comprising: (a1) with a flow cytometer in an operating state, collecting one or more signals related to a first fluid exiting an orifice of the flow cytometer; in response to the at least one signal, converting the flow cytometer from the operating state to a docking state in which the orifice is in fluid communication with a source of rinse fluid; or (a2) in response to a predetermined schedule, converting a flow cytometer having an orifice from an operating state to a docking state in which the orifice is in fluid communication with a source of rinse fluid; or (a3) in response to a user input, converting a flow cytometer having an orifice from an operating state to a docking state in which the orifice is in fluid communication with a source of rinse fluid; and (b) while the flow cytometer is in the docking state, communicating a rinse fluid through the orifice.

In the method of the fourth aspect the first fluid can comprise sample material therein.

In the method of the fourth aspect the first fluid can exit the orifice in a first direction, and wherein the rinse fluid is exerted in a direction essentially opposite to the first direction.

In the method of the fourth aspect the rinse fluid cab be exerted so as to remove an obstruction from the orifice or a conduit with which the orifice is in fluid communication.

The method of the fourth aspect can further comprise monitoring a pressure of the rinse fluid.

In the method of the fourth aspect, converting the flow cytometer from the operating state to the docking state can comprise engagement between the orifice and a tip sealing cup.

In the method of the fourth aspect, the engagement can be at least partially maintained by a resilient member.

The method of the fourth aspect can further comprise converting the flow cytometer from the docking state to the operating state. Converting the flow cytometer from the docking state to the operating state can be effected after the rinse fluid is communicated through the orifice for a predetermined period of time.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document. In the drawings:
FIG. 1 is a schematic diagram of a nozzle system and docking station with the nozzle system in a position for operation.
FIG. 2 is a schematic diagram of the embodiment of FIG. 1 with the nozzle system in a docked position.
FIG. 3 provides a depiction of a fluid monitoring arrangement, showing a camera used to monitor droplet breakoff.
FIG. 4 provides a depiction of a fluid monitoring arrangement configured to monitor droplet and/or stream direction.

### DETAILED DESCRIPTION OF ILLUSTRATIVE EMBODIMENTS

The present disclosure may be understood more readily by reference to the following detailed description of desired embodiments and the examples included therein.

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent to those described herein can be used in practice or testing. The materials, methods, and examples disclosed herein are illustrative only and not intended to be limiting.

The singular forms "a," "an," and "the" include plural referents unless the context clearly dictates otherwise.

As used in the specification and in the claims, the term "comprising" may include the embodiments "consisting of" and "consisting essentially of." The terms "comprise(s)," "include(s)," "having," "has," "can," "contain(s)," and variants thereof, as used herein, are intended to be open-ended transitional phrases, terms, or words that require the presence of the named ingredients/steps and permit the presence of other ingredients/steps. However, such description should be construed as also describing compositions or processes as "consisting of" and "consisting essentially of" the enumerated ingredients/steps, which allows the presence of only the named ingredients/steps, along with any impurities that might result therefrom, and excludes other ingredients/steps.

As used herein, the terms "about" and "at or about" mean that the amount or value in question can be the value designated some other value approximately or about the same. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Unless indicated to the contrary, the numerical values should be understood to include numerical values which are the same when reduced to the same number of significant figures and numerical values which differ from the stated value by less than the experimental error of conventional measurement technique of the type described in the present application to determine the value.

All ranges disclosed herein are inclusive of the recited endpoint and independently of the endpoints (e.g., "between 2 grams and 10 grams, and all the intermediate values includes 2 grams, 10 grams, and all intermediate values"). The endpoints of the ranges and any values disclosed herein are not limited to the precise range or value; they are sufficiently imprecise to include values approximating these ranges and/or values. All ranges are combinable.

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. In at least some instances, the approximating language may correspond to the precision of an instrument for measuring the value. The modifier "about" should also be considered as disclosing the range defined by the absolute values of the two endpoints. For example, the expression "from about 2 to about 4" also discloses the range "from 2 to 4." The term "about" may refer to plus or minus 10% of the indicated number. For example, "about 10%" may indicate a range of 9% to 11%, and "about 1" may mean from 0.9-1.1. Other meanings of "about" may be apparent from the context, such as rounding off, so, for example "about 1" may also mean from 0.5 to 1.4. Further, the term "comprising" should be understood as having its open-ended meaning of "including," but the term also includes the closed meaning of the term "consisting." For example, a composition that comprises components A and B may be a composition that includes A, B, and other components, but may also be a composition made of A and B only.

### Figures

The attached figures are illustrative only and do not limit the scope of the present disclosure or the appended claims.

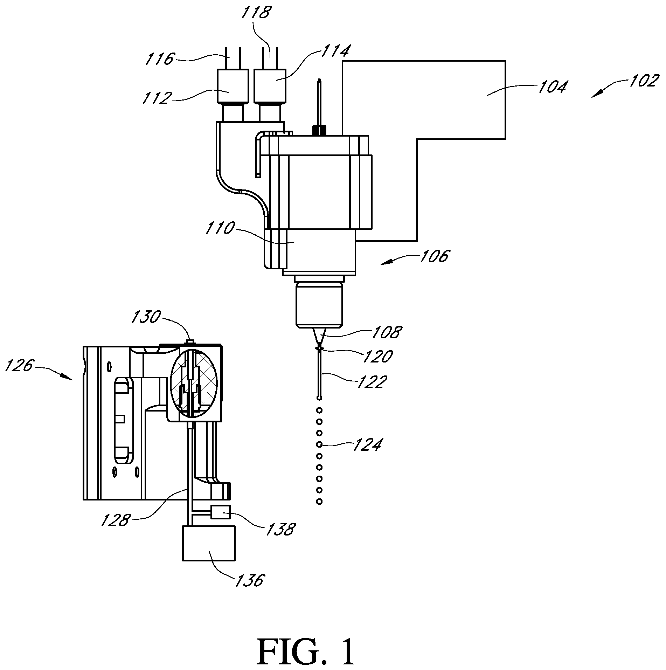

FIG. 1 illustrates an exemplary nozzle system 102 and a docking station 126. The nozzle system 102 can comprise a five-axis mover that moves the nozzle 106 and the nozzle tip 108 in five axes, i.e., forward and backward, side to side, vertically, and tilting in two directions. This articulation allows nozzle tip 108 to direct stream 122 to laser intersection 120 through nozzle tip 108. A vibrator (not shown) in nozzle 106 or in mechanical communication with nozzle 106 can provide a vibration that assists in breaking the stream 122 into droplets 124. Stream 122 can be, e.g., a stream of sheath fluid that is obtained from the sheath supply port 116 that is mixed with living cells or other material under analysis.

Sheath fluid can be, e.g., saline or other solution that protects the viability of the living cells that are mixed with the sheath fluid. The sheath fluid can be jetted out of the small nozzle orifice of the nozzle tip 108. Typically, the orifices range from 50 to 200 microns. For example, nozzle tip 108 can have an opening of, e.g., 50, 70, 100, 120, 150 and 200 microns.

Because nozzle tips are relatively small orifices that communicate a mixture of salt water and cells, cells can clump together to plug the orifice, and the flow cytometer's operator may have to expend significant amount time and effort to unclog the nozzle tip 108. In addition to clogging that can occur as a result of flow cytometer operation, if the nozzle system 102 is left to sit for several hours (e.g., overnight) sheath fluid can evaporate, leaving behind salt crystals in the nozzle tip 108 and/or in other locations within nozzle body 110, and this crystallization can also cause clogs or partial clogs that affect the operation of the nozzle system 102.

As described here, in the disclosure technology provides an automated way of preventing crystal formation and removing or dislodging clogs resulting from clumps of cells. As disclosed, this can be achieved by effecting relative motion between nozzle system 102 (in FIG. 1) and docking station 126 so that the nozzle tip 108 is inserted into a tip sealing cup 130. This can be accomplished by, e.g., moving nozzle system 102 such that nozzle tip 108 engages with tip sealing cup 130.

Rinse fluid (e.g., pressurized deionized water) 128 is then exerted backwards through the nozzle tip 108, which fluid in turn flushes any clogs in nozzle tip 108 out through waste disposal port 118. Other rinse fluids (e.g., ethanol, methanol, acetone) besides deionized water can be used. The nozzle tip 108 can stay in its docked position until again placed in use; in this way, fluid around the nozzle tip 108 cannot evaporate and cause salt crystals to form.

As illustrated in FIG. 1, the nozzle system 102 can be placed in an operating position (or first state) so that cell sorting or cell analysis can occur. As shown, sheath supply port 116 can be connected to nozzle body 110 and nozzle tip 108 such that with sheath supply valve 112 in the open position, stream 122 of sheath fluid can be pumped through nozzle 106. Nozzle mover 104 can be a five-axis mover configured to move nozzle tip 108 in a forward and back direction, in a side to side direction, in a vertical direction and is capable of tilting the nozzle tip 108 in two axes. This in turn allows the stream 122 that is jetted from the nozzle tip 108 to be correctly oriented to laser intersection 120, where one or more lasers can interrogate fluid (present as, e.g., a stream or as a droplet) located at intersection 120. (It should be understood, however, that nozzle mover 104 need not be a five-axis mover, as nozzle mover can be configured to move nozzle tip 108 in fewer than five axes. As an example, nozzle mover 104 can move nozzle tip in two or three directions, and can also tilt nozzle tip 108 in zero, one, or two directions.) As shown (and as described elsewhere herein), vibration can be generated in the nozzle 106 so that the stream 122 breaks into droplets 124. The presence of vibration, however, is optional, as is the presence of droplets.

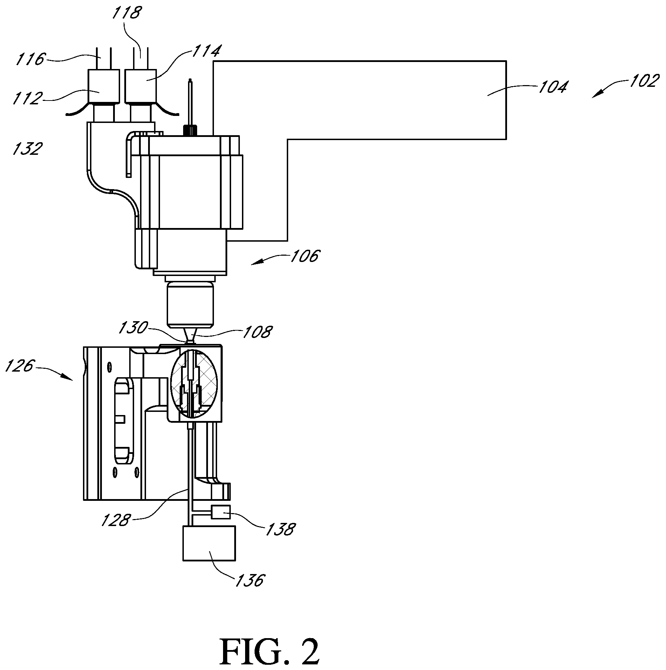

Although not shown in FIG. 1 or FIG. 2, a system according to the present disclosure can also include a camera or other optics configured to collect information (e.g., visual information) related to stream 122 and/or droplets 124. As one example, a system according to the present disclosure can include one or more optical trains configured to determine if droplets 124 are breaking off from stream 122 as expected.

As some examples, a system can include an optical train that measures droplet amplitude, e.g., via visual imaging. If droplet amplitude deviates from a predetermined value (or is outside of a pre-determine range), the system can be configured to alert a user to unexpected or out-of-specification droplet formation. An optical train can also be used to assess the angle at which stream 122 exits nozzle tip 108, as the exit angle of stream 122 can be indicative of the presence of obstructing material within nozzle system 102. An optical train can, as described, include any one or more of a visual camera, an infrared camera, and a mirror or mirrors.

A mirror (or mirrors) can be disposed so as to permit determination of information related to stream 122 and/or droplets 124. As a non-limiting example of the foregoing, one or more mirrors can be disposed so as to allow evaluation of the direction of stream 122 in a first plane and also direction of stream 122 in a second plane at an angle to the first plane. Similarly, one or more mirrors can be disposed so as to allow evaluation of droplets 124 (e.g., direction, size, amplitude) in a first plane and also in a second plane at an angle to the first plane.

Sheath supply port 116 can be connected to the nozzle body 106 and nozzle tip 108 through sheath supply valve 112, which valve can be electronically operated. Similarly, waste disposal port 118 can be connected to nozzle 106 through waste valve 114, which valve can be electronically operated. In the operating condition (or first state), sheath supply valve 112 is open and waste valve 114 is closed.

As also shown in FIG. 1, docking station 126 can be located nearby to nozzle system 102. Docking station 126 can include (or be connected to) rinse fluid supply 128, which fluid supply can be pressurized to a predetermined pressure by pump 136, which pump can be, e.g., a peristaltic pump. A pressure transducer (element 138) can be used to monitor the pressure of rinse fluid supply 128.

As shown, rinse fluid supply 128 can be in fluid communication with tip sealing cup 130. Tip sealing cup 130 can be constructed from, e.g., a short segment of fluorinated ethylene-propylene (FEP) tubing or any other compliant material that is capable of forming a seal with nozzle tip 108. As one non-limiting example, FEP tubing used in tip sealing cup 130 can have an outside diameter of 1/8 inch and an inside diameter of 1/16 inch. Without being bound to any particular theory or embodiment, FEP tubing is considered especially suitable for use as tip sealing cup 130, as FEP tubing is compliant and durable and is capable of creating a seal around the nozzle tip 108 when the nozzle tip 108 is engaged with the tip sealing cup 130. Tip sealing cup 130 can be conical (or frustoconical) in configuration, but can also be cylindrical in configuration.

FIG. 2 is a schematic diagram nozzle system 102 in a docking position (or second state) with a nozzle tip 108 placed into the tip sealing cup 130. As illustrated in FIG. 2, nozzle mover 104 can move the nozzle system 102 into a docking position and lowers nozzle 106 so that nozzle tip 108 is securely engaged with tip sealing cup 130. Nozzle tip 108 can, as disclosed, be moved by the nozzle mover 104 in five axes to ensure that the nozzle tip 108 is engaged with in tip sealing cup 130. Supply valve 112 is closed (e.g., via electronic control), and waste valve 114 remains in the closed position. Rinse fluid from supply 128 is exerted via tip sealing cup 130, with nozzle tip 108 securely positioned in tip sealing cup 130. Pump 136 can exert the rinse fluid to a predetermined pressure that is monitored by pressure transducer 138. With both sheath supply valve 112 and the electronically operated waste valve 114 being in closed positions, the rinse fluid does not otherwise have a path out of nozzle 106. (Sheath supply valve 112 and waste valve 114 can be operated by control wires 132 and 134, respectively.) If there is no leak between tip sealing cup 130 and nozzle tip 108, the flow rate of the rinse fluid 128 should be zero. In that instance, a check of pump 136 that pumps the rinse fluid 128 to determine that pump 136 is not pumping provides an indication that no leak exists between nozzle tip 108 and tip sealing cup 130. A check of the pressure detected by pressure transducer 138 can also provide an indication that a leak exists at the nozzle tip/tip sealing cap intersection. This approach can be used as an alternative to checking the operation of pump 136 or in combination with checking operation of pump 136.

After checking that the peristaltic pump 136 is not pumping, and/or a pressure drop is not detected by pressure transducer 138, waste valve 114 can be opened so that rinse fluid can flow from rinse fluid supply 128 through tip sealing cup 130 and through nozzle tip 108 and nozzle body 106 to waste port 118. The pressure from rinse fluid supply 128 - applied through nozzle tip 108 - is sufficient to remove clogs from nozzle tip 108 and any obstructions in nozzle 106. This in turn flushes such obstructions through waste disposal port 118. (As described elsewhere herein, the pressure of rinse fluid supply 128 is modulated by the peristaltic pump 136 and pressure transducer 138.) The use of rinse fluid supply 128 (which can be non-saline, e.g., deionized water) functions to dissolve salt crystals and flush nozzle system 102 to remove salt content and other obstructions, e.g., cell clumps. This flushing flow of rinse fluid, which can take place such that the rinse fluid flows is a direction opposite to the direction in which sheath fluid flows during system operation, creates a clean system with nozzle tip 108 and nozzle body 106 that do not have obstructions from clumps of cells or crystalline salt.

Nozzle system 102 can remain in the docked position shown in FIG. 2 until the system is ready for use again, for either sorting cells or analyzing cells. As but some examples, nozzle system 102 can remain in its docked position between sample runs, overnight, or during other periods of system downtime. The nozzle system 102 can remain in the docked position illustrated in FIG. 2 for long periods of time and since the nozzle system 102 has been flushed with deionized water, and the nozzle tip 108 is sealed to the tip sealing cup 130, the nozzle tip 108 does not dry out and salt crystals do not form in the nozzle tip 108 or on an exterior surface of the nozzle tip 108.

When operation is initiated for the flow cytometer, nozzle system 102 can be moved by nozzle mover 104 to the operating position illustrated in FIG. 1. Because the cleaning and unclogging of salt and clumps of cells is automatic, an operator simply needs to initiate the operation of the flow cytometer system and is not required to take any manual steps for replacement of nozzles or any other manual steps. The system illustrated in FIGs. 1 and 2 can convert (in an automated fashion) to the operating position (or first state) illustrated in FIG. 1 upon initiation of the start up sequence. A system according to the present disclosure can be arranged so as to be convertible between the operating position and the docking position on demand by the user (e.g., during a pause in an experimental run or even in between runs), but can also be convertible between the operating position and the docketing position on a schedule, e.g., at 6:00 PM each evening, over a weekend, or according to other user-determined schedule.

When the system is in the docking position, the system can be operated using one or more profiles related to delivery of DI water, cleaner, and other decontamination fluids. A user can select the profile that they believe is best-suited to the necessary operation or even utilize their own customized settings. Delivery of one or more of DI, cleaner, and other decontamination fluid can be according to a preset time or according to a duration set by the user. The user can also select which fluids are delivered through the nozzle for cleaning. A system can be configured to detect a flowrate related to a cleaning fluid (e.g., DI water exerted into the nozzle when the system is in the docking position); if the flowrate is outside of an expected range, the system can advise the user and/or change the flow (pressure, pulsatility) of the fluid exerted into the nozzle. A system can be configured to deliver DI water separately from cleaning and decontamination fluids, but a system can also be configured to deliver those fluids simultaneously. A system can be, e.g., configured to deliver DI water, followed by cleaning and/or decontamination fluids, followed by further DI water. Other orders of fluid delivery (e.g., cleaning and/or decontamination fluids followed by DI water) can also be used. Fluids can be delivered in a constant flow and/or in a pulsatile flow. Fluids can be delivered with different flowrates (e.g., DI water delivered at a higher flowrate than cleaning and/or decontamination fluids). Likewise, fluids can be delivered with different pulsatilities.

A system can be configured such that a first flushing operation is automated as part of system startup. Following that first operation, a user can determine when to unclog and re-start stream setup. Alternatively, a system can be fully automated such that when the system detects stream or droplet flow that is outside of specifications, the system can automatically enter the docking mode. A system can also be automated so as to advise a user when out-of-specification stream or droplet flow is detected.

Without being bound to any particular theory or embodiment, droplet symmetry (besides the amplitude required for droplet formation and the stream exit angle) is another indicator of system status. In some instances, a clog can be difficult to detect visually but can manifest in the actual particle measurements from lasers, either by way of decreased signal and/or by way of increased variability in the measurement. A system can use calibration particles (e.g., beads) to check operation, and if the detected intensity is too low or variation too high, the detected intensity can indicate a partial clog.

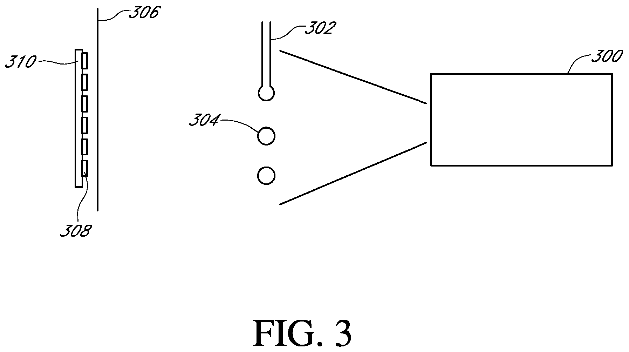

FIG. 3 provides an illustration of a fluid monitoring train. As shown, a droplet camera 300 can be used to view stream 302 and droplet 304 that breaks off from stream 302. Droplet camera 300 can use strobed infrared light in sync with the droplet formation to monitor the breakoff point. As shown, the train can include a column of infrared LEDs 308 (supported by support 310), which infrared LEDs can have a diffuser 306 in front of them that is directly opposite the stream from the camera. In this arrangement, camera 302 is thus really looking at stream 302 as stream 302 is back-lit. In this way, camera 300 can be used to monitor droplet formation, which droplet formation can be used to assess whether a clog has developed within the fluid flow system, e.g., at the nozzle tip (not shown).

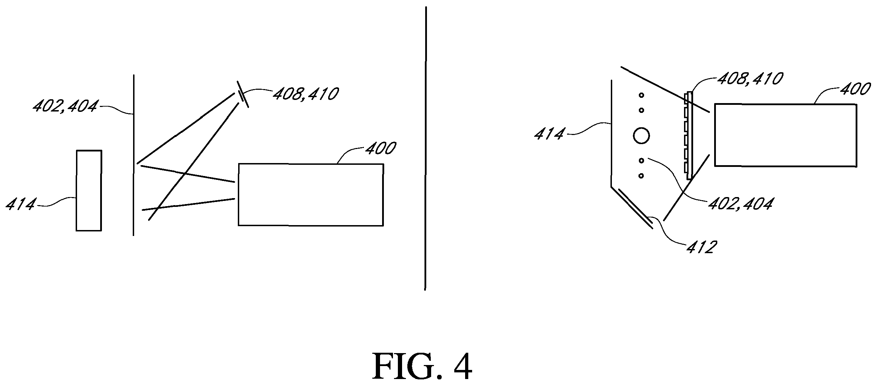

An additional train is shown in FIG. 4. This train can be placed farther downstream from the train shown in FIG. 3, and can be used to observe droplets as the droplets are deflected by an electrostatic deflection for sorting. The additional train's location at a downstream distance from the nozzle tip provides a useful point to observe the exit angle. As shown in FIG. 4 (left panel is a side view; right panel is a top view), the additional train can use infrared LEDs (408, supported by support 410) to illuminate stream 402 (and, when present, droplets 404) from the back with a camera (400) on the same side as the LEDs so as to visualize the illuminated stream and deflected droplets. A blocking background 414 can be used to keep stray light from reaching camera 400. Mirror 412 can be added to part of the background at, e.g., a 45-degree angle, such that stream 402 (and droplets 402) can be observed in the front-back angle. In this manner, camera 400 can be used to observe fluid both side-to-side and front-to-back and can detect the exit angle of the stream.

The foregoing description of the invention has been presented for purposes of illustration and description. It is not intended to be exhaustive or to limit the invention to the precise form disclosed. The embodiment was chosen and described in order to best explain the principles of the invention and its practical application to thereby enable others skilled in the art to best utilize the invention in various embodiments as are suited to the particular use contemplated. The scope of the invention is defined by the appended claims.

## Claims

1. A method of unclogging a flow cytometer, the flow cytometer comprising:
a nozzle system (102) comprising
a nozzle tip (108) and a sheath fluid conduit, the nozzle tip configured to communicate a sheath fluid therethrough and the nozzle tip being in communication with the sheath fluid conduit;
a sheath supply valve (112) configured to interrupt fluid communication between the nozzle tip (108) and a supply of sheath fluid;
a waste disposal port (118) in fluid communication with the nozzle tip (108); and
a waste valve (114) configured to interrupt fluid communication between the nozzle tip (108) and the waste disposal port (118);
the method comprising:
converting the flow cytometer from an operating state to a docking state such that in the docking state, the nozzle system (102) of the flow cytometer is aligned with a docking station (126) comprising a rinse fluid pump (136),
the converting being effected by relative motion between the nozzle system (102) and the docking station (126),
the docking state being such that the nozzle tip (108) of the nozzle system (102) engages with a tip sealing cup (130) of the docking station (126) so as to form a seal between the tip sealing cup and the nozzle tip,
the nozzle tip (108) being in fluid communication with at least one fluid pathway of the nozzle system (102);
with the rinse fluid pump (136), communicating a rinse fluid from said docking station (126) to the nozzle tip (108) so as to flush the nozzle tip and at least a portion of the at least one fluid pathway,
wherein said rinse fluid is communicated through the nozzle tip (108) to the waste disposal port (118) when said waste valve (114) is open and said sheath supply valve (112) is closed.

2. The method of claim 1, further comprising maintaining said nozzle system (102) in said docking state until operation of said flow cytometer is initiated.

3. The method of any one of claims 1-2, further comprising converting the flow cytometer from the docking state to the operating state, in particular,
wherein the converting is effected in an automated fashion.

4. The method of any one of claims 1-3, further comprising collecting at least one signal related to a fluid exiting the nozzle tip (108) of the nozzle system (102) when the flow cytometer is in the operating state, advantageously
wherein the signal is indicative of an amplitude of fluid droplets, a direction of fluid flow, or any combination thereof.

5. The method of claim 4, wherein the converting the system from the operating state to the docking state is in response to the at least one signal.

6. The method of claim 1, further comprising (a) closing the sheath fluid supply valve (112) in fluid communication with the nozzle tip (108), (b) closing the waste valve (114) in fluid communication with the nozzle tip (108), the waste valve (114) being configured to permit passage therethrough of rinse fluid communicated from the docking station (126) to the nozzle tip (108), or (c) both (a) and (b); and
determining whether rinse fluid communicated from the docking station (126) is leaking from the seal between the tip sealing cup (130) and the nozzle tip (108), in particular,
wherein the determining comprises detecting whether the rinse fluid pump (136) pumps the rinse fluid, or
wherein the determining comprises detecting a pressure of said rinse fluid.

7. The method of claim 6, further comprising opening the waste valve (114) after determining that no leak exists at the seal between the tip sealing cup (130) and the nozzle tip (108).

8. The method of any one of claims 1-7, wherein the relative motion comprises movement of the nozzle system (102), advantageously
wherein the movement of the nozzle system (108) is effected by a five-axis mover.

9. The method of any one of claims 1-8 wherein at least one resilient member maintains engagement between the nozzle tip (108) and the tip sealing cup (130), or
wherein the tip sealing cup (130) comprises a resilient material.

10. A flow cytometer system, comprising:
a nozzle system (102) comprising
a nozzle tip (108) and a sheath fluid conduit, the nozzle tip (108) configured to communicate a sheath fluid therethrough and the nozzle tip (108) being in communication with the sheath fluid conduit;
a sheath supply valve (112) configured to interrupt fluid communication between the nozzle tip (108) and a supply of sheath fluid;
a waste disposal port (118) in fluid communication with the nozzle tip (108); and
a waste valve (114) configured to interrupt fluid communication between the nozzle tip (108) and the waste disposal port (118);
a docking station (126), comprising:
a rinse fluid conduit;
a tip sealing cup (130), and
a rinse fluid pump (126) configured to exert rinse fluid into the rinse fluid conduit,
the tip sealing cup (130) configured to sealably engage with the nozzle tip (108) so as to form a seal between the tip sealing cup (130) and the nozzle tip (108); and
a nozzle mover (104) configured to move the nozzle system (102) from an operating position to a docking position, in which docking position the nozzle tip (108) engages with the tip sealing cup (130) such that said rinse fluid can be communicated through the nozzle tip (108) to the waste disposal port (118) when said waste valve (114) is open and said sheath supply valve (112) is closed.

11. The system of claim 10, wherein at least one of the sheath supply valve (112) and the waste valve (114) are electronically operated manifold valves.

12. The system of any one of claims 10 or 11, wherein the nozzle mover (104) is a five-axis mover.

13. The system of any one of claims 10-12, further comprising a pressure transducer (136) configured to monitor a pressure of rinse fluid pumped by the pump (126).

14. The system of any one of claims 10-13, further comprising an optical train configured to collect at least one signal related to a fluid exiting the nozzle tip system when the nozzle tip (108) is in the operating position, in particular
wherein the signal is indicative of an amplitude of fluid droplets, a direction of fluid flow, or any combination thereof.

15. The system of any one of claims 10-14, wherein the nozzle mover (104) is configured to move the nozzle system (102) from the operating position to the docking position in response to the at least one signal.

16. The system of any one of claims 10-15, wherein the system is configured such that the nozzle mover (104) (a) moves the nozzle system (102) from the operating position to the docking position according to a predetermined schedule, (b) moves the nozzle system (102) from the docking position to the operating position according to a predetermined schedule, or (c) both (a) and (b).

17. The system of any one of claims 10-16, further comprising a resilient member configured to maintain engagement between the nozzle tip (108) and the tip sealing cup (130).

18. The system of any one of claims 10-17, wherein the pump (126) is configured to deliver the rinse fluid at a predetermined pressure sufficient to remove obstructions in the nozzle tip (108), the conduit, or both the nozzle tip (108) and the conduit.

## Patentansprüche

1. Verfahren zum Entstopfen eines Durchflusszytometers, das Durchflusszytometer umfassend:
ein Düsensystem (102), umfassend
eine Düsenspitze (108) und eine Hüllfluidleitung, wobei die Düsenspitze konfiguriert ist, um ein Hüllfluid durch diese hindurch zu leiten, und die Düsenspitze in Verbindung mit der Hüllfluidleitung steht;
ein Hüllzufuhrventil (112), das konfiguriert ist, um die Fluidverbindung zwischen der Düsenspitze (108) und einer Zufuhr von Hüllfluid zu unterbrechen;
eine Abfallentsorgungsöffnung (118) in Fluidverbindung mit der Düsenspitze (108); und
ein Abfallventil (114), das konfiguriert ist, um die Fluidverbindung zwischen der Düsenspitze (108) und der Abfallentsorgungsöffnung (118) zu unterbrechen;
wobei das Verfahren umfasst:
Überführen des Durchflusszytometers von einem Betriebszustand in einen Andockzustand, sodass in dem Andockzustand das Düsensystem (102) des Durchflusszytometers auf eine Andockstation (126) ausgerichtet ist, die eine Spülfluidpumpe (136) umfasst,
wobei das Überführen durch eine Relativbewegung zwischen dem Düsensystem (102) und der Andockstation (126) bewirkt wird,
wobei der Andockzustand derart ist, dass die Düsenspitze (108) des Düsensystems (102) mit einer Spitzendichtungskappe (130) der Andockstation (126) in Eingriff steht, um eine Dichtung zwischen der Spitzendichtungskappe und der Düsenspitze zu bilden,
wobei die Düsenspitze (108) in Fluidverbindung mit mindestens einem Fluidweg des Düsensystems (102) steht;
mit der Spülfluidpumpe (136), Leiten eines Spülfluids von der Andockstation (126) zu der Düsenspitze (108), um die Düsenspitze und mindestens einen Abschnitt des mindestens einen Fluidwegs zu spülen,
wobei das Spülfluid durch die Düsenspitze (108) zu der Abfallentsorgungsöffnung (118) geleitet wird, wenn das Abfallventil (114) geöffnet ist und das Hüllzufuhrventil (112) geschlossen ist.

2. Verfahren nach Anspruch 1, ferner umfassend das Halten des Düsensystems (102) in dem Andockzustand, bis der Betrieb des Durchflusszytometers eingeleitet wird.

3. Verfahren nach einem der Ansprüche 1 bis 2, ferner umfassend das Überführen des Durchflusszytometers aus dem Andockzustand in den Betriebszustand, insbesondere,
wobei das Umwandeln auf automatisierte Weise bewirkt wird.

4. Verfahren nach einem der Ansprüche 1 bis 3, ferner umfassend das Erfassen mindestens eines Signals, das sich auf ein Fluid bezieht, das aus der Düsenspitze (108) des Düsensystems (102) austritt, wenn sich das Durchflusszytometer in dem Betriebszustand befindet, vorteilhafterweise
wobei das Signal eine Amplitude von Fluidtröpfchen, eine Richtung eines Fluidstroms oder jeder Kombination davon angibt.

5. Verfahren nach Anspruch 4, wobei das Überführen des Systems von dem Betriebszustand in den Andockzustand als Reaktion auf das mindestens eine Signal erfolgt.

6. Verfahren nach Anspruch 1, ferner umfassend (a) Schließen des Hüllfluidzufuhrventils (112) in Fluidverbindung mit der Düsenspitze (108), (b) Schließen des Abfallventils (114) in Fluidverbindung mit der Düsenspitze (108), wobei das Abfallventil (114) konfiguriert ist, um den Durchgang von Spülfluid durch dieses hindurch zu ermöglichen, das von der Andockstation (126) an die Düsenspitze (108) geleitet wird, oder (c) sowohl (a) als auch (b); und
Bestimmen, ob Spülfluid, das von der Andockstation (126) zugeführt wird, aus der Dichtung zwischen der Spitzendichtungskappe (130) und der Düsenspitze (108) austritt, insbesondere,
wobei das Bestimmen das Erfassen umfasst, ob die Spülfluidpumpe (136) das Spülfluid pumpt, oder
wobei das Bestimmen das Erfassen eines Drucks des Spülfluids umfasst.

7. Verfahren nach Anspruch 6, ferner umfassend das Öffnen des Abfallventils (114) nach dem Bestimmen, dass an der Dichtung zwischen der Spitzendichtungskappe (130) und der Düsenspitze (108) kein Leck vorliegt.

8. Verfahren nach einem der Ansprüche 1 bis 7, wobei die Relativbewegung eine Bewegung des Düsensystems (102) umfasst, vorteilhafterweise
wobei die Bewegung des Düsensystems (108) durch einen Fünf-Achsen-Beweger bewirkt wird.

9. Verfahren nach einem der Ansprüche 1 bis 8, wobei mindestens ein elastisches Element den Eingriff zwischen der Düsenspitze (108) und der Spitzendichtungskappe (130) aufrechterhält, oder
wobei die Spitzendichtungskappe (130) ein elastisches Material umfasst.

10. Durchflusszytometersystem, umfassend:
ein Düsensystem (102), umfassend
eine Düsenspitze (108) und eine Hüllfluidleitung, wobei die Düsenspitze (108) konfiguriert ist, um ein Hüllfluid durch diese hindurch zu leiten, und die Düsenspitze (108) in Verbindung mit der Hüllfluidleitung steht;
ein Hüllzufuhrventil (112), das konfiguriert ist, um die Fluidverbindung zwischen der Düsenspitze (108) und einer Zufuhr von Hüllfluid zu unterbrechen;
eine Abfallentsorgungsöffnung (118) in Fluidverbindung mit der Düsenspitze (108); und
ein Abfallventil (114), das konfiguriert ist, um die Fluidverbindung zwischen der Düsenspitze (108) und der Abfallentsorgungsöffnung (118) zu unterbrechen;
eine Andockstation (126), umfassend:
eine Spülfluidleitung;
eine Spitzendichtungskappe (130), und
eine Spülfluidpumpe (126), die konfiguriert ist, um Spülfluid in die Spülfluidleitung zu fördern,
die Spitzendichtungskappe (130), die konfiguriert ist, um abdichtend mit der Düsenspitze (108) in Eingriff zu kommen, um eine Dichtung zwischen der Spitzendichtungskappe (130) und der Düsenspitze (108) zu bilden; und
einen Düsenbeweger (104), der konfiguriert ist, um das Düsensystem (102) von einer Betriebsposition in eine Andockposition zu bewegen, in welcher Andockposition die Düsenspitze (108) mit dem Spitzendichtungskappe (130) in Eingriff steht, sodass das Spülfluid durch die Düsenspitze (108) zu der Abfallentsorgungsöffnung (118) geleitet werden kann, wenn das Abfallventil (114) geöffnet ist und das Hüllzufuhrventil (112) geschlossen ist.

11. System nach Anspruch 10, wobei mindestens eines von dem Hüllzufuhrventil (112) und dem Abfallventil (114) ein elektronisch betätigtes Verteilerventil ist.

12. System nach einem der Ansprüche 10 oder 11, wobei der Düsenbeweger (104) ein Fünf-Achsen-Beweger ist.

13. System nach einem der Ansprüche 10 bis 12, ferner umfassend einen Druckwandler (136), der konfiguriert ist, um einen Druck von Spülfluid zu überwachen, das durch die Pumpe (126) gepumpt wird.

14. System nach einem der Ansprüche 10 bis 13, ferner umfassend einen optischen Zug, der konfiguriert ist, um mindestens ein Signal in Bezug auf ein Fluid zu erfassen, das aus dem Düsenspitzensystem austritt, wenn sich die Düsenspitze (108) in der Betriebsposition befindet, insbesondere
wobei das Signal eine Amplitude von Fluidtröpfchen, eine Richtung eines Fluidstroms oder jeder Kombination davon angibt.

15. System nach einem der Ansprüche 10 bis 14, wobei der Düsenbeweger (104) konfiguriert ist, das Düsensystem (102) als Reaktion auf das mindestens eine Signal von der Betriebsposition in die Andockposition zu bewegen.

16. System nach einem der Ansprüche 10 bis 15, wobei das System derart konfiguriert ist, dass der Düsenbeweger (104) (a) das Düsensystem (102) gemäß einem vorbestimmten Zeitplan von der Betriebsposition in die Andockposition bewegt, (b) das Düsensystem (102) gemäß einem vorbestimmten Zeitplan von der Andockposition in die Betriebsposition bewegt, oder (c) sowohl (a) als auch (b).

17. System nach einem der Ansprüche 10 bis 16, ferner umfassend ein elastisches Element, das konfiguriert ist, um den Eingriff zwischen der Düsenspitze (108) und der Spitzendichtkappe (130) aufrechtzuerhalten.

18. System nach einem der Ansprüche 10 bis 17, wobei die Pumpe (126) konfiguriert ist, um das Spülfluid mit einem vorbestimmten Druck abzugeben, der ausreicht, um Verstopfungen in der Düsenspitze (108), der Leitung oder sowohl der Düsenspitze (108) als auch der Leitung zu entfernen.

## Revendications

1. Procédé de débouchage d'un cytomètre en flux, le cytomètre en flux comprenant :
un système de buse (102) comprenant
un embout de buse (108) et un conduit de fluide de gaine, l'embout de buse étant conçu pour communiquer un fluide de gaine à travers celui-ci et l'embout de buse étant en communication avec le conduit de fluide de gaine ;
une vanne d'alimentation de gaine (112) conçue pour interrompre la communication fluidique entre l'embout de buse (108) et une alimentation en fluide de gaine ;
un orifice d'évacuation de déchets (118) en communication fluidique avec l'embout de buse (108) ; et
une vanne de décharge (114) conçue pour interrompre la communication fluidique entre l'embout de buse (108) et l'orifice d'évacuation de déchets (118) ;
le procédé comprenant :
la conversion du cytomètre en flux d'un état de fonctionnement à un état d'accueil de telle sorte que dans l'état d'accueil, le système de buse (102) du cytomètre en flux soit aligné avec une station d'accueil (126) comprenant une pompe de fluide de rinçage (136),
la conversion étant effectuée par un mouvement relatif entre le système de buse (102) et la station d'accueil (126),
l'état d'accueil étant tel que l'embout de buse (108) du système de buse (102) vient en prise avec une coupelle d'étanchéité d'embout (130) de la station d'accueil (126) de manière à former un joint d'étanchéité entre la coupelle d'étanchéité d'embout et l'embout de buse,
l'embout de buse (108) étant en communication fluidique avec au moins un passage de fluide du système de buse (102) ;
avec la pompe à fluide de rinçage (136), la communication d'un fluide de rinçage depuis ladite station d'accueil (126) vers l'embout de buse (108) de manière à rincer l'embout de buse et au moins une partie de l'au moins un passage de fluide,
dans lequel ledit fluide de rinçage est communiqué à travers l'embout de buse (108) vers l'orifice d'évacuation de déchets (118) lorsque ladite vanne de déchets (114) est ouverte et que ladite vanne d'alimentation de gaine (112) est fermée.

2. Procédé selon la revendication 1, comprenant en outre le maintien dudit système de buse (102) dans ledit état d'accueil jusqu'à ce que le fonctionnement dudit cytomètre en flux soit initié.

3. Procédé selon l'une quelconque des revendications 1 à 2, comprenant en outre le passage du cytomètre en flux de l'état d'accueil à l'état de fonctionnement, en particulier,
dans lequel la conversion est effectuée de manière automatisée.

4. Procédé selon l'une quelconque des revendications 1 à 3, comprenant en outre la collecte d'au moins un signal relatif à un fluide sortant de l'embout de buse (108) du système de buse (102) lorsque le cytomètre en flux est à l'état de fonctionnement, avantageusement
dans lequel le signal est indicatif d'une amplitude de gouttelettes de fluide, d'une direction d'écoulement de fluide, ou de toute combinaison de celles-ci.

5. Procédé selon la revendication 4, dans lequel la conversion du système de l'état de fonctionnement à l'état d'accueil s'effectue en réponse à l'au moins un signal.

6. Procédé selon la revendication 1, comprenant en outre (a) la fermeture de la vanne d'alimentation en fluide de gaine (112) en communication fluidique avec l'embout de buse (108), (b) la fermeture de la vanne de déchets (114) en communication fluidique avec l'embout de buse (108), la vanne de déchets (114) étant conçue pour permettre le passage à travers celle-ci du fluide de rinçage communiqué de la station d'accueil (126) à l'embout de buse (108), ou (c) à la fois (a) et (b) ; et
le fait de déterminer si le fluide de rinçage communiqué depuis la station d'accueil (126) fuit du joint d'étanchéité entre la coupelle d'étanchéité d'embout (130) et l'embout de buse (108), en particulier,
dans lequel la détermination comprend le fait de détecter si la pompe à fluide de rinçage (136) pompe le fluide de rinçage, ou
dans lequel la détermination comprend la détection d'une pression dudit fluide de rinçage.

7. Procédé selon la revendication 6, comprenant en outre l'ouverture de la vanne de déchets (114) après avoir déterminé qu'aucune fuite n'existe au niveau du joint d'étanchéité entre la coupelle d'étanchéité d'embout (130) et l'embout de buse (108).

8. Procédé selon l'une quelconque des revendications 1 à 7, dans lequel le mouvement relatif comprend le déplacement du système de buse (102), avantageusement
dans lequel le déplacement du système de buse (108) est effectué par un dispositif de déplacement à cinq axes.

9. Procédé selon l'une quelconque des revendications 1 à 8, dans lequel au moins un élément élastique maintient la mise en prise entre l'embout de buse (108) et la coupelle d'étanchéité d'embout (130), ou
dans lequel la coupelle d'étanchéité d'embout (130) comprend un matériau élastique.

10. Système de cytomètre de flux, comprenant :
un système de buse (102) comprenant
un embout de buse (108) et un conduit de fluide de gaine, l'embout de buse (108) étant conçu pour acheminer un fluide de gaine à travers celui-ci et l'embout de buse (108) étant en communication avec le conduit de fluide de gaine ;
une vanne d'alimentation de gaine (112) conçue pour interrompre la communication fluidique entre l'embout de buse (108) et une alimentation en fluide de gaine ;
un orifice d'évacuation des déchets (118) en communication fluidique avec l'embout de buse (108) ; et
une vanne de décharge (114) conçue pour interrompre la communication fluidique entre l'embout de buse (108) et l'orifice d'évacuation des déchets (118) ;
une station d'accueil (126), comprenant :
un conduit de fluide de rinçage ;
une coupelle d'étanchéité d'embout (130), et
une pompe à fluide de rinçage (126) conçue pour injecter du fluide de rinçage dans le conduit de fluide de rinçage,
la coupelle d'étanchéité d'embout (130) étant conçue pour venir en prise de manière étanche avec l'embout de buse (108) de manière à former un joint entre la coupelle d'étanchéité d'embout (130) et l'embout de buse (108) ; et
un dispositif de déplacement de buse (104) conçu pour déplacer le système de buse (102) d'une position de fonctionnement à une position d'accueil, dans laquelle la pointe de buse (108) vient en prise avec la coupelle d'étanchéité de pointe (130) de telle sorte que ledit fluide de rinçage peut être acheminé à travers la pointe de buse (108) vers l'orifice d'évacuation de déchets (118) lorsque ladite vanne de déchets (114) est ouverte et que ladite vanne d'alimentation de gaine (112) est fermée.

11. Système selon la revendication 10, dans lequel au moins l'une de la vanne d'alimentation de gaine (112) et de la vanne de déchets (114) est une vanne de collecteur à commande électronique.

12. Système selon l'une quelconque des revendications 10 ou 11, dans lequel le dispositif de déplacement de buse (104) est un dispositif de déplacement à cinq axes.

13. Système selon l'une quelconque des revendications 10 à 12, comprenant en outre un transducteur de pression (136) conçu pour surveiller une pression de fluide de rinçage pompé par la pompe (126).

14. Système selon l'une quelconque des revendications 10 à 13, comprenant en outre un train optique conçu pour collecter au moins un signal relatif à un fluide sortant du système d'embout de buse lorsque l'embout de buse (108) est dans la position de fonctionnement, en particulier
dans lequel le signal est indicatif d'une amplitude de gouttelettes de fluide, d'une direction d'écoulement de fluide, ou de toute combinaison de celles-ci.

15. Système selon l'une quelconque des revendications 10 à 14, dans lequel le dispositif de déplacement de buse (104) est conçu pour déplacer le système de buse (102) de la position de fonctionnement à la position d'accueil en réponse à l'au moins un signal.

16. Système selon l'une quelconque des revendications 10 à 15, dans lequel le système est conçu de telle sorte que le dispositif de déplacement de buse (104) (a) déplace le système de buse (102) de la position de fonctionnement à la position d'accueil selon un programme prédéterminé, (b) déplace le système de buse (102) de la position d'accueil à la position de fonctionnement selon un programme prédéterminé, ou (c) à la fois (a) et (b).

17. Système selon l'une quelconque des revendications 10 à 16, comprenant en outre un élément élastique conçu pour maintenir l'engagement entre l'embout de buse (108) et la coupelle d'étanchéité d'embout (130).

18. Système selon l'une quelconque des revendications 10 à 17, dans lequel la pompe (126) est conçue pour délivrer le fluide de rinçage à une pression prédéterminée suffisante pour éliminer les obstructions dans l'embout de buse (108), le conduit, ou à la fois l'embout de buse (108) et le conduit.
